# EUROPEAN PATENT APPLICATION

(11) **EP 2 733 970 A1**
(43) Date of publication of application: **21.05.2014**
(21) Application number: 12306429.7
(22) Date of filing: 16.11.2012
(51) Int. Cl.: H04W 4/04, H04W 4/20

(54) **An indoor mobile augmented reality application**

(71) Applicant: Alcatel Lucent, 75007 Paris (FR)
(72) Inventor: Jabaud, Philippe, 91620 NOZAY (FR); Boussard, Mathieu, 91620 NOZAY (FR); Lu, Monique, 91620 NOZAY (FR)
(74) Representative: MERH-IP Matias Erny Reichl Hoffmann

(57) **Abstract**

A system for providing, in a predefined environment (10) including a plurality of objects (2-6), augmented reality information to a handheld device (1) directly held by a holder in the said environment (10), said handheld device (1) including an imaging device (15) and means (12) for measuring orientation data of the said handheld device (1), said system comprising
- means (7) for measuring the 3D position, in the said environment, of the holder of the handheld device (1), said means (7) for measuring being external to said handheld device (1);
- means (8) for determining, using the measured orientation data and the measured 3D position, at least an object (2) among the said plurality of objects (2-6) to which the imaging device (15) of the handheld device is pointed;
- means (8) for communicating augmented reality information associated to the determined object to the handheld device (1).

## Description

### FIELD OF THE INVENTION

The invention relates generally to the technical field of augmented reality.

### BACKGROUND OF THE INVENTION

The notable development of handheld devices is making of them successful commodity devices. In fact, provided with high-quality displays, satisfactory resolution digital cameras, sensors and wireless communication interfaces, Personal Digital Assistants (PDAs), tablets, pocket PCs, smart phones and the like are disposed to assist, through appropriate applications, the user in several situations.

In particular, mobile Augmented Reality (AR) applications permit to display virtual objects and information along with the real world (i.e. displaying information relating to an object that a user is looking at trough the video camera of his handheld device) which may be of interest in many different fields such as education, tourism, business and cinematography.

Accordingly, with the increased capabilities of mobile handheld devices, mobile applications for augmented reality have recently regained real traction (such as Layar® and Wikitude®).

Mobile AR applications are location-based services in that the displayed/overlaid information are generally related to what is being captured by the camera of the handheld device (i.e. the user's position in the real world).

Therefore, mobile AR applications are based on location sensing means. Actually, most of the recent mobile usages rely on GPS (Global Positioning System) and accelerometers to superpose (generally, Web originated) information on top of a video camera view.

However, GPS as well as any other Global Navigation Satellite System are not operant in indoor environments, limiting by the way the utility of mobile AR applications. In fact, using such discovery/interaction paradigm in an indoor smart space to retrieve surrounding resources of interest (e.g. objects) is not possible as GPS is not available and wireless positioning is hardly standard.

Moreover, an indoor tracking system based on markers (such as infrared trackers or ultrasonic location system using tags, badges, RFID sensors or QR-codes) placed in the indoor environment may only cover a limited area and is at the cost of extensive electronic infrastructure deployment. Likewise, computer vision-based localization systems are generally very consuming in terms of hardware and software resources, as well as dependent on lighting conditions.

One object of the present invention is to provide an indoor mobile augmented reality application.

Another object of the present invention is to propose a small and ergonomic device supporting AR technologies that can support users in their everyday interactions in indoor environments.

Another object of the present invention is to propose a new class of AR applications to display on smartphone screen additional information about objects (point of interest) in visual proximity to the user.

Another object of the present invention is to provide a mobile AR application capable of working with readily available peripherals handheld devices, notably smartphones.

Another object of the present invention is to propose a mobile AR application that does not use GPS data.

### SUMMARY OF THE INVENTION

Various embodiments are directed to addressing the effects of one or more of the problems set forth above. The following presents a simplified summary of embodiments in order to provide a basic understanding of some aspects of the various embodiments. This summary is not an exhaustive overview of these various embodiments. It is not intended to identify key of critical elements or to delineate the scope of these various embodiments. Its sole purpose is to present some concepts in a simplified form as a prelude to the more detailed description that is discussed later.

Various embodiments relate to systems for providing, in a predefined environment including a plurality of objects, augmented reality information to a handheld device directly held by a holder in the said environment, said handheld device including an imaging device and means for measuring orientation data of the said handheld device, said system comprising
- means for measuring the 3D position, in the said environment, of the holder of the handheld device, said means for measuring being external to said handheld device;
- means for determining, using the measured orientation data and the measured 3D position, at least an object among the said plurality of objects to which the imaging device of the handheld device is pointed;
- means for communicating augmented reality information associated to the determined object to the handheld device.

In accordance with a broad aspect, the means for measuring the 3D position, in the said environment, of the holder of the handheld device comprise a depth-sensor configured to determine the 3D position, in the said environment, of the holder of the handheld device.

In accordance with another broad aspect, the said means for measuring the 3D position, in the said environment, of the holder of the handheld device is a hand gesture recognition system.

In accordance with another broad aspect, the means for measuring orientation data of the handheld device comprise an internal orientation sensor of the handheld device configured to measure orientation data of the handheld device such as a gyroscope.

In accordance with another broad aspect, the said means for determining at least an object among the said plurality of objects to which the imaging device of the handheld device is pointed, is provided with a synthesized 3D model of the environment.

In accordance with another broad aspect, the synthesized 3D model of the environment comprises the positions and the approximate volumes of the plurality of objects in the said environment.

Various embodiments relate to methods for providing, in a predefined environment including a plurality of objects, augmented reality information for a handheld device, said handheld device including an imaging device and means for measuring orientation data of the said handheld device, said handheld device being directly held by a holder in the said environment, said method comprising the following steps
- measuring the 3D position, in the said environment, of the holder of the handheld device by measuring means external to said handheld device;
- measuring orientation data of the handheld device;
- determining, using the measured orientation data and the measured 3D position, of at least an object among the said plurality of objects to which the imaging device of the handheld device is pointed;
- communicating augmented reality information associated to the determined object to the handheld device.

In accordance with a broad aspect, the measuring step of the 3D position, in the said environment, of the holder of the handheld device comprises a hand recognition step.

In accordance with another broad aspect, the determining step, using the measured orientation data and the measured 3D position, of at least an object among the said plurality of objects to which the imaging device of the handheld device is pointed, includes a placing step of the measured 3D position and of the measured orientation data in a synthesized 3D model of the environment, said synthesized 3D model comprising the positions and the approximate volumes of the plurality of objects in the said environment.

In accordance with another broad aspect, the augmented reality information is communicated to the handheld device, only when the measured 3D position and the measured orientation data of the handheld device remain nearly constant for a predefined period of time.

Various embodiments further relate to a computer program product for performing the above methods.

While the various embodiments are susceptible to various modification and alternative forms, specific embodiments thereof have been shown by way of example in the drawings. It should be understood, however, that the description herein of specific embodiments is not intended to limit the various embodiments to the particular forms disclosed.

It may of course be appreciated that in the development of any such actual embodiments, implementation-specific decisions should be made to achieve the developer's specific goal, such as compliance with system-related and business-related constraints. It will be appreciated that such a development effort might be time consuming but may nevertheless be a routine understanding for those or ordinary skill in the art having the benefit of this disclosure.

### BRIEF DESCRIPTION OF THE DRAWINGS

The objects, advantages and other features of the present invention will become more apparent from the following disclosure and claims. The following non-restrictive description of preferred embodiments is given for the purpose of exemplification only with reference to the accompanying drawings in which:
- FIG.1 is a schematic diagram illustrating a handheld device according to different embodiments;
- FIG.2 is a schematic diagram illustrating a smart space according to different embodiments;
- FIG.3 is schematic diagram illustrating the interactions of a handhold device, provided with a mobile AR application, with entities deployed within a smart space.

### DETAILED DESCRIPTION OF ILLUSTRATIVE EMBODIMENTS

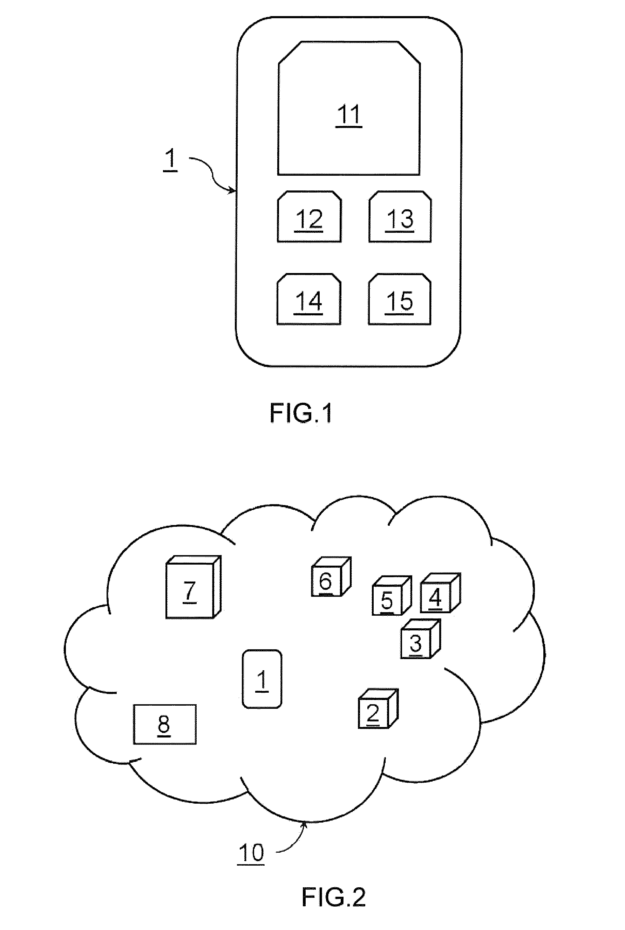

With reference to figure 1, there is shown a handheld device **1** comprising a display unit **11,** an internal orientation sensor **12,** a wireless communication interface **13,** a mobile AR application **14** and an imaging device **15** (such as digital video camera, or a digital camera).

The display unit **11** of the handheld device **1** permits to visualize real objects captured by the camera **15**, as well as digital information provided thereto from the mobile AR application **14.**

The internal orientation sensor **12** (such as a gyroscope, an accelerometer, an inertial sensor, or a 3-axis inclinometer sensor) provides information related to the physical orientation (namely yaw, pitch, and roll angles, generally, in an absolute way) of the handheld device **1**. The imaging device **15** is secured to the handheld device **1** so that the orientation data provided by the internal orientation sensor **12** may be utilized to determine the direction to which the user is pointing. In other words, the fact of orienting the imaging device **15** of the handheld device **1** to a certain direction is considered as a natural way of indicating the point of interest of the user.

The mobile AR application **14** is a mobile application configured to overlay information about object(s) pointed (i.e. captured) by the handheld device video camera **15**.

The wireless communication interface **13** may be any communication module supporting a short-range or a long-range wireless connectivity (such as Bluetooth™, HiperLAN, Wireless LAN, Home RF, WiFi, ZigBee, GSM, GPRS, W-CDMA, WiMAX) for wireless communication with a distant server.

Referring now to figure 2, the handheld device **1** is in an indoor or semi-indoor environment **10** which comprise a plurality of fixed objects **2-6.** As illustrative examples of such environments **10,** one can mention a museum comprising a plurality of antiquities and statues, a showroom comprising a plurality of exhibited objects, a store comprising a plurality of articles, a tube station **10** comprising a plurality of signboards and of advertising hoardings, or a hall comprising a plurality of objects.

A gesture recognition system **7** external to the handheld device **1** is configured to determine the 3D position, in the environment **10,** of the user hand that directly holds (i.e. directly support) the handheld device **1.** As illustrative examples, the gesture recognition system **7** may use the Microsoft® Kinect device, a Time-of-Flight camera, or any depth sensor based system permitting to determine, through skeleton detection, the 3D position of the hand of user within a given geographical coordinates (namely, a hand gesture recognition system). Accordingly, advantageously, the gesture recognition system **7** is a marker-less sensor system that tracks the user body as a skeleton structure. Alternatively, or in addition, the gesture recognition system **7** may be based on image recognition of user hand.

The gesture recognition system **7** is deployed so that it covers the environment **10** (or at least a substantial part of it). To that end, this gesture recognition system **7** may be scaled to confined environments for example, by space partitioning scheme thanks to a plurality of cooperative position recognition subsystem.

The gesture recognition system **7** is configured to provide, on request or in accordance with a schedule, to a remote server **8,** the 3D position of the user hand holding the handheld device **1** within the environment **10.**

For determining whether the right or the left or both user hands are holding the handheld device **1**, this may be provided by the user (a right-handed or left-handed person) to the mobile AR application (for example, in a configuration step or in response to a request submitted to the user by the mobile AR application **14**) Alternatively, the user hand that is holding the handheld device **1** may be automatically determined by observing the movements (acceleration) of the two hands by the gesture recognition system **7** and retrieving the acceleration of the handheld device **1** by the remote server **8.** The remote server **8** compares the acceleration data of each hand with that of the handheld device **1** and then determines the hand that is holding the handheld device **1.**

The mobile AR application **14** is configured to retrieves the orientation data (yaw, pitch, roll) from the internal orientation sensor **12,** and to communicate, in real time or close to real time, these orientation data to the remote server **8** through the wireless communication interface **13**.

Accordingly, the remote server **8** gathers
- the orientation data of the handheld device **1**, and
- the 3D position, in the environment **10,** of the user hand holding the handheld device **1**
for analysis so as to determine the targeted real object **2-6** by the user.

To that end, the remote server **8** is provided with a synthesized 3D model of the environment **10**. This 3D model of the environment **10** describes the positions and the approximate volumes of the real objects **2-6** present (i.e. visible) in this environment **10.** Advantageously, this synthesized 3D model may be limited to simple shapes (e.g. spheres and boxes) that encompass the considered objects **2-6** in the environment **10.** Preferably, the 3D model of the environment is regularly updated to reflect changes of objects **2-6** in the indoor environment **10.**

The remote server **8** confronts this pointed direction with the position (location) of the user hand that holds the handheld device and the 3D model of the environment **10** to decide which object **2-6** is being pointed to (or, the closest one to the pointed direction), and sends events via the wireless communication interface **13** to the handheld device **1**.

The remote server **8** places the position of the user hand holding the handheld device **1** in the synthesized 3D model of the environment **10** and, from this position, determines the object(s) located in the direction derived from the orientation data of the handheld device **1.**

In one embodiment, the remote server **8** averages the computed pointed direction (from the measured position of the user hand holding the handheld device correlated with the handheld device orientation) in order to reduce jitter.

Once the remote server **8** determines the user's target (the closest object to the orientation of the handheld device, taking into account the position of the user hand holding the handheld device **1** in the environment **10),** it returns to the handheld device **1** information associated with the determined object **2-6.** Such information may be any visual (textual labels, or 3D model for example) or auditory content.

In one embodiment, if the remote server **8** does not find, within the synthesized 3D model, any object that it lies in the pointed direction by the handheld device **1**, it sends to the mobile AR application **14** a list of virtual objects associated to the real objects close to the user target. Thus, the user may select one of them through appropriate input means (such as, tactile screen, keyboard or track-pad). Retrieving further information may be obtained from the remote server or from any other communication network such as Internet (for example, via an URL associated to the virtual object).

In one embodiment, the remote server **8** communicates a virtual object to be displayed with the captured real object **2-6** by the imaging device (i.e. video camera or camera) **15** of the handheld device **1**.

Accordingly, the mobile AR application enriches the camera view of the real world with additional virtual information. For example, the virtual information may simulate a see-through, a 3D display (three-dimensional augmented view of the real object **2-6),** a 2D display, or textual labels (name of the object, author, and descriptive information for examples),

In one embodiment, in order to avoid unintended detection when the user is just moving his arm, an object has to be pointed for a configurable period of time before sending events to the handheld device **1.** Different events may be notified to the mobile application to display feedback, such as
- START: user starts pointing an object **2-6**;
- CANCEL: object **2-6** not pointed for enough time;
- POINTING: object **2-6** has been detected;
- STOP: object **2-6** no more pointed.

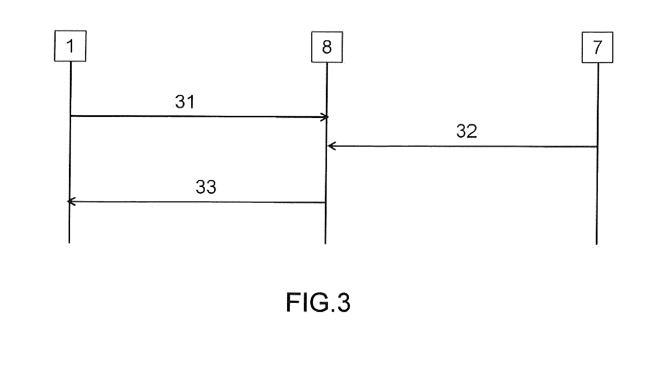

In an illustrative embodiment depicted in figure 3 of the above described method and system,
- while video capturing of an object **2** present in the environment **10,** the mobile AR application **14** retrieve the orientation data of the handheld device **1** from the internal orientation sensor **12**;
- the mobile AR application **14** submits (step 31 in figure 3) the retrieved orientation data to the remote server **8** through the wireless communication interface **13;**
- the 3D position of the user hand that holds the handheld device **1** in the environment **10** is provided by the gesture recognition system **7** to the remote server **8** (step 32 in figure 3);
- based on the orientation data and the 3D user hand position, the remote server **8** computes the direction that the user is pointing. The server 8 determines the pointed objects by doing a 3D intersection query in the 3D synthesized model (the intersection query can be done using a ray or a cone from the user hand and the objects shapes);
- the remote server 8 communicates (step 33 in figure 3) to the handheld device **1** information or services associated with the object to which the user is pointing;
- the mobile AR application overlays the communicated information or services on the display unit **11** of the handheld device **1** (or, plays the communicated audio content).

In one embodiment, the mobile AR application **14** overlays the received information from the remote server **8** in an increasingly or decreasingly variable intensity in function of the variation in time of the orientation data of the handheld device **1** (for example, maximum (respectively, intermediate or null) intensity as the handheld device remains oriented more than one second (respectively, between 0.5 and one second or less than 0.5 second) to a certain object).

In one embodiment, some of the tasks/computations of the remote **server 8** may be offloaded to the handheld device **1** or to the gesture recognition system **7.** In fact, some or all of these tasks may be done on the handheld device.

In another embodiment, to avoid network latency, the determination of the direction may be implemented on the phone (required means being comprised in the phone) and virtual objects may be stocked on a distant server from which a requested virtual object may be rapidly retrieved on the basis of local descriptors.

In one embodiment, the exchanged data between the handheld device **1** and the remote server **8** are compressed and/or encoded according to various data compression methods to make it run as fast as possible.

Advantageously, the remote server **8** does not perform any image/object recognition tasks; instead it uses the 3D position of the user hand (determined by the gesture recognition system **7)** in the environment **10** and the orientation of the handheld device **1** (measured by the internal orientation sensor **11**). Consequently, the above-described method and system are operable under a variety of viewing and lighting conditions.

The above described method may be deployed in different application areas such as an interactive museum or exhibition guide, or more generally for initiating search queries about objects in visual proximity to the user. Accordingly, by simply pointing the handheld device video camera (or camera) at objects around the user, it is possible to obtain additional information about them.

Moreover, the above described method and system may be used in confined environment where the user has to identify a specific object in his/her vicinity among a set of identical objects (for example, to identify a specific equipment in a rack), or in complex environment to display additional information on objects that cannot be touched by visitors (power on/off, temperature, radiation level for example).

It is to be noted that it is possible to utilize the user position and the rough direction of the user arm, both being determined by the gesture recognition system **7,** so as to determine the object **2-6** that the user points to, but with the disadvantage of a low accuracy in comparison with the use of the handheld device orientation and the 3D user position. In fact, the orientation sensor permits to determine the exact pointing direction, leading to a better discriminating between small objects or objects close to each other.

It is also to be noted that the above described method and system may be deployed in combination with any other mobile AR application for outdoor environment based on GPS localization.

## Claims

1. A system for providing, in a predefined environment (10) including a plurality of objects (2-6), augmented reality information to a handheld device (1) directly held by a holder in the said environment (10), said handheld device (1) including an imaging device (15) and means (12) for measuring orientation data of the said handheld device (1), said system comprising
- means (7) for measuring the 3D position, in the said environment, of the holder of the handheld device (1), said means (7) for measuring being external to said handheld device (1);
- means (8) for determining, using the measured orientation data and the measured 3D position, at least an object (2) among the said plurality of objects (2-6) to which the imaging device (15) of the handheld device is pointed;
- means (8) for communicating augmented reality information associated to the determined object to the handheld device (1).

2. The system of claim 1 wherein the means for measuring the 3D position, in the said environment, of the holder of the handheld device (1) comprise a depth-sensor configured to determine the 3D position, in the said environment, of the holder of the handheld device (1),

3. The system of claim 1 or 2, wherein the said means for measuring the 3D position, in the said environment, of the holder of the handheld device (1) is a hand gesture recognition system.

4. The system of any of the preceding claims, wherein the said means for determining at least an object (2) among the said plurality of objects (2-6) to which the imaging device (15) of the handheld device is pointed, is provided with a synthesized 3D model of the environment (10).

5. The system of the preceding claim, wherein the synthesized 3D model of the environment (10) comprises the positions and the approximate volumes of the plurality of objects (2-6) in the said environment (10).

6. The system of any of the preceding claims, wherein the communicated augmented reality information is a visual or an auditory content.

7. The system of any of the preceding claims further comprising the handheld device (1), wherein the means (12) for measuring orientation data of the handheld device (1) comprise an internal orientation sensor (12) of the handheld device (1) configured to measure orientation data of the handheld device (1).

8. The system of the precedent claim, wherein the internal orientation sensor (12) is a gyroscope.

9. The system of any of the preceding claims further comprising the handheld device (1), wherein the said handheld device (1) is configured to wirelessly transmit the measured orientation data to the said means (8) for determining at least an object (2) among the said plurality of objects (2-6) to which the imaging device (15) of the handheld device is pointed.

10. The system of any of claims 7 to 9, wherein the means (8) for determining, using the measured orientation data and the measured 3D position, at least an object (2) among the said plurality of objects (2-6) to which the imaging device (15) of the handheld device is pointed are comprised in the handheld device (1).

11. A method for providing, in a predefined environment (10) including a plurality of objects (2-6), augmented reality information for a handhold device (1), said handheld device (1) including an imaging device (15) and means (12) for measuring orientation data of the said handheld device (1), said handheld device being directly held by a holder in the said environment (10), said method comprising the following steps
- measuring the 3D position, in the said environment, of the holder of the handheld device (1) by measuring means (7) external to said handheld device (1);
- measuring orientation data of the handheld device (1);
- determining, using the measured orientation data and the measured 3D position, of at least an object (2) among the said plurality of objects (2-6) to which the imaging device (15) of the handheld device is pointed;
- communicating augmented reality information associated to the determined object to the handheld device (1).

12. The method of claim 11, wherein the measuring step of the 3D position, in the said environment, of the holder of the handheld device (1) comprises a hand recognition step.

13. The method of claim 11 or 12, wherein the determining step, using the measured orientation data and the measured 3D position, of at least an object (2) among the said plurality of objects (2-6) to which the imaging device (15) of the handheld device is pointed, includes a placing step of the measured 3D position and of the measured orientation data in a synthesized 3D model of the environment (10), said synthesized 3D model comprising the positions and the approximate volumes of the plurality of objects (2-6) in the said environment (10).

14. The method of any of claims 11 to 13, wherein the augmented reality information is communicated to the handheld device (1), only when the measured 3D position and the measured orientation data of the handheld device (1) remain nearly constant for a predefined period of time.

15. Computer program implemented on a processing unit of a computer, said program including code sections for performing instructions corresponding to the steps of a method according to any of claims 11 to 14.
